# EUROPEAN PATENT SPECIFICATION

(11) **EP 0 241 276 B1**
(45) Date of publication and mention of the grant of the patent: **19.01.1994**
(21) Application number: 87303048.0
(22) Date of filing: 08.04.1987
(51) Int. Cl.: A01D 47/00, A01D 41/06

(54) **Crop harvesting apparatus and methods**
Erntemaschine für Feldfrüchte und Verfahren
Appareil pour récolter la moisson et procédé

(30) Priority: 09.04.1986 GB 8608585
(43) Date of publication of application: 14.10.1987
(60) Divisional application: 90119999.2
(73) Proprietor: BRITISH TECHNOLOGY GROUP LIMITED, London SE1 6BU (GB)
(72) Inventor: Klinner, Wilfred Erwin, Milton Keynes Buckinghamshire MK17 8TN (GB)
(74) Representative: Laight, Martin Harvey

(56) References cited:
- WO-A-86/01972
- DE-B- 1 028 821
- DE-B- 1 138 574
- DE-C- 937 798
- FR-A- 737 261
- FR-A- 2 466 946
- GB-A- 1 591 187
- US-A- 1 343 884
- US-A- 1 418 542
- US-A- 1 660 554

## Description

The present invention relates to apparatus for, and methods of, harvesting crop. The invention is concerned with detaching from the stems or other plant parts of standing crop, seeds, seed-bearing parts, leaves, twigs, flowers, or other predetermined required portion of the crop, collecting the required portion, and leaving the remaining stripped parts of the crop standing in the field. The invention has particular but not exclusive application in the harvesting of grain crops, such as wheat, oats, barley, and rice. The invention also has application in the stripping of leaves, young shoots, and sometimes blossom from crops. Examples include lucerne (alfalfa) leaves for protein production, and the leaves and flowers of herbs and other crops used for the extraction of essential oils and other constituents.

The present specification contains some subject matter in common with the specification of European patent application No. 90119999.2 (publication No. EP-A-0 423 789) which has been divided from the present specification.

In US-A-1418542 (Dill) a harvester for stripping grain from standing crop has a stripper reel composed of a series of spirally arranged stripper bars having stripper teeth or fingers. The stripper teeth are triangular and the side edges, which diverge from the distal tip, have upstanding flanges which strip and catch the grain and pass it back into troughs formed at the base of each row of stripping teeth. The troughs carry the grain rearwardly over the rotor axis and release the grain into a catch basin formed by the rear of a stationary hood which encases the reel and is open at its lower front portion.

It is an object of the present invention to provide improved apparatus for and methods of stripping required parts from a standing crop, usually the most valuable parts of the crop, namely the seed, leaves, and/or flowers. It is an object of the invention to overcome many of the disadvantages of known harvesting methods and devices, and to simplify, hasten and make less expensive the harvesting process.

According to the present invention in a first aspect there is provided apparatus for harvesting required crop parts from standing crop comprising a mobile frame for movement over the ground, moveable support means mounted for driven movement relative to the frame, a plurality of outwardly projecting crop engaging elements mounted on the moveable support means, guide means cooperating with the crop engaging elements to form a crop flow passage, and drive means for driving the moveable support means to carry the elements upwardly at a front region of the apparatus so as to detach from standing crop predetermined required parts of the crop and to move the detached crop parts along the crop flow passage, the crop engaging elements being arranged to engage standing crop while projecting forwardly relative to the direction of forward travel of the apparatus, the forwardly projecting crop engaging elements forming in operation a plurality of crop gathering regions each having converging boundaries, characterised in that each crop gathering region has an intake region formed by said converging boundaries and at least two succeeding relief regions which lead inwardly away from the distal ends of the elements, each relief region having boundaries which, at the entrance to the relief region, diverge from each other and face away from the distal ends of the crop engaging elements.

The invention encompasses apparatus for detaching from the stems or other plant parts of standing crop, seeds, seed-bearing parts, leaves, twigs, flowers and/or other predetermined required parts of the crop, by rubbing and/or breaking and/or tearing the parts from the stems.

By the term standing crop is meant crop in the field before any harvesting operation has been carried out on it, for example before any cutting operation, and the term standing crop includes crop which may be laid, leaning, or twisted, as well as upright crop.

In accordance with a particularly preferred feature of the invention, the said relief regions are provided for allowing stripped remaining crop parts to be released from the elements and/or for providing edges of the elements adapted to strip required parts from the crop.

In some arrangements each element includes at the junction of the said converging boundaries an inwardly extending slot aligned along the general direction of forward movement of the apparatus.

It is a particularly preferred feature of the invention that the edges of the relief regions are adapted to detach crop parts from regions of the standing crop which face forwardly relative to the intended direction of movement of the apparatus.

Preferably the drive means is arranged to drive the crop stripping elements at a speed such that detached crop parts are impelled along the crop flow passage and do not reside to any substantial extent on the moving elements.

Preferably the drive means is arranged to drive the crop stripping elements at a tip speed greater than 5 m/s, most preferably at a tip speed in the range 5 to 15 m/s.

Preferably the crop stripping elements are resiliently mounted, and/or made of flexible resilient material. Preferably the guide means comprises a cover extending around at least part of the region at which the crop engaging elements move at the front region of the apparatus.

Preferably the said moveable support means comprises a rotor, but may alternatively comprise an endless conveyor.

In some arrangements the crop engaging elements are arranged in rows transverse to the direction of forward movement of the apparatus. Preferably the said crop stripping elements are arranged with succeeding elements along the support means in register with one another.

It is a feature of the present invention that the crop engaging elements are preferably moved at a relatively high speed. A number of criteria can be used to establish the required high speed, for example the speed of movement of the crop engaging elements relative to the frame will normally be set to be substantially greater than the forward speed of movement of the frame, and set at a speed such as to propel the stripped material in a fast moving stream along the crop flow passage defined between the guide means and the crop engaging elements. Preferably the tip speed of the crop engaging elements is greater than 5 m/s, conveniently within the approximate range 5 to 15 m/s. The forward speed of the frame may be in a range up to 15 km/hour, preferably in the range 3 to 9 km/hour.

A distinction of row crops from cereal crops is, for example, that the row spacing is very much greater, and that row crops have stems several times the diameter of cereal crops. For cereals the spacing might be 125 to 175 mm, and for row crops the spacing might be 200 to 750 mm. The stem diameter for cereals might be 3 to 6 mm. The stem diameter for row crops might be 8 to 40 mm. Row crops grow very much taller, for example 2 m or more. Another difference is that often the material being harvested, for example cobs, occurs relatively low down the stem, whereas with cereal crops the material being harvested is all positioned at the head of the crop. Examples of row crops include maize, sorghum, oil seed rape, and field beans.

There will now be introduced a number of further features of the invention, applicable in harvesting apparatus generally.

In accordance with a preferred feature the said at least two succeeding relief regions are provided in an arrangement comprising an inwardly extending slot aligned along the general direction of forward movement of the apparatus, said inwardly extending slot including two or more relief regions each defined by re-entrant edges of a crop stripping element.

In general it is a feature that at least some of the crop engaging elements have a transverse surface for impelling the detached crop parts along the crop flow passage.

By a transverse surface is meant a surface which extends principally transverse to the direction of the movement of the element by the moveable support means. The surface may conveniently be substantially flat, but in some arrangements may be curved, preferably slightly concave.

The elements may be of varying shapes which will be set out hereinafter, but it is preferred particularly that the distal tip region of each crop stripping element is pointed with the distal side edges diverging from the apex of the element, preferably the distal tip region having a transverse leading surface.

In accordance with a preferred feature it may be provided that at least some of the relief spaces are defined by re-entrant edges of the elements adapted to strip crop parts from regions of the standing crop which face forwardly relative to the intended direction of movement of the apparatus.

Conveniently the crop stripping elements are formed of synthetic plastics material, but they may be made of metal or other materials of adequate strength and wear resistance.

In general, those aspects of the invention which have been described with reference to apparatus according to the invention, may also be provided with reference to methods of harvesting in accordance with the invention, and vice-versa.

There is also provided in accordance with the present invention a method of harvesting crop comprising moving through a standing crop a harvesting apparatus, moving upwardly at a front region of the apparatus a plurality of crop engaging elements which project outwardly from moveable support means on which they are mounted, engaging the standing crop by the moving elements when projecting forwardly relative to the direction of movement of the apparatus, the forwardly projecting crop engaging elements forming a plurality of crop gathering regions each having converging boundaries, detaching from standing crop predetermined required parts of the crop, conveying the detached crop parts along a crop flow passage, and collecting the detached crop parts, characterised in that the step of engaging the standing crop includes gathering crop in the said crop gathering regions by means of an intake region formed by the said converging boundaries, guiding the crop to at least two succeeding relief regions which lead inwardly away from the distal ends of the elements and which have boundaries which, at the entrance to the relief region, diverge from each other and face away from the distal ends of the crop engaging elements, detaching crop parts by the effect of edges of elements defining relief regions, and releasing stripped remaining standing crop parts from the elements through relief regions of the elements.

As has been mentioned, it is a feature of the present invention that the crop engaging elements are preferably moved at a relatively high speed.

In examples of preferred methods embodying the invention, a method of harvesting cereals may include moving the crop engaging elements relative to the frame at a speed such that the tip speed of the elements is in the range 10 to 25 m/s. In accordance with another preferred example, a method of harvesting lucerne (alfalfa) includes moving the crop engaging elements relative to the frame at a speed such that the tip speed of the elements is in the range 15 to 30 m/s.

It is a general preferred feature of the present invention that the crop engaging elements may enter the crop with minimum disturbance, and move upwardly through the crop to strip the required parts of the crop without the need for the crop to be supported in an upright position by any stationary guide members projecting forwardly of the said moving crop engaging elements. It is to be appreciated that there may be provided in some arrangements additional stationary lifting elements for raising the crop to the moving crop engaging elements in suitable manner where the crop is laid, but there is, at least in preferred embodiments of the invention, no requirement for stationary guide elements to hold the crop in the upright position during stripping in the vertical crop region swept by the crop stripping elements.

As has been mentioned, the guide means will normally consist of or include a hood or cover over the upwardly and rearwardly moving elements. It is preferred that the said hood may be moveable either closer to or further from the crop engaging elements, and/or around a curved path around the front of the path of movement of the elements.

In accordance with another feature of the invention, there may be provided means for adjusting the height of support means for the crop engaging elements, either together with the height of the overhead hood, or independently of the height of the overhead hood, to allow adjustment of the height at which the crop engaging elements enter the crop and move upwardly through the crop.

The present invention has a number of applications, particularly in the harvesting of grain. The stripped material can be collected into trailers or bulk containers for transportation to a central plant for processing. In the case of cereals and other seeds this may include completion of the threshing process and separation of the seed from material other than grain. Alternatively, particularly with cereals and other seeds, the stripped material may be fed directly into a processing machine, such as a combine harvester,for immediate threshing and cleaning. At a central plant or in the field the material other than grain may be collected loose or pressed for utilisation.

Generally, the invention finds application in the harvesting of mature seeds and grains, in the vining of peas and in the defoliation of annual and perennial crops as well as shrubs, including the non-destructive harvesting of leaves and shoots in one or repeated passes over the crop.

Embodiments of the invention will now be described by way of example with reference to the accompanying drawings in which:-
Figure 1 is a diagrammatic side view in section of a crop row harvester which may embody the invention;
Figure 2 is a front, part-sectional view of the crop row harvester shown in the direction of arrows AA in Figure 1 which may be adapted to embody the invention;
Figure 3 is a diagrammatic representation of a crop guide shown in Figure 1 in the direction of arrows BB in Figure 1;
Figure 4 shows in diagrammatic side view a front part of the apparatus of Figure 1, when in operation;
Figures 5, and 7 show two forms of crop engaging element embodying the invention which may be used in the apparatus of Figure 1, and Figures 6, and 8, show respective sections along lines AA in Figures 5, and 7;
Figure 9 is a diagrammatic side view in section of one general form of apparatus for harvesting crop, which may embody the present invention;
Figure 10 is a diagrammatic side view in section of an alternative general form of apparatus for harvesting crop, which may embody the invention;
Figure 11 is a diagrammatic side view in section of a further alternative general form of apparatus for harvesting crop, which may embody the invention;
Figure 12 is a perspective view from the front of crop harvesting apparatus, of the form shown generally in Figure 9 , which does not embody the invention but is included to show the general construction of apparatus which may be modified to embody the present invention;
Figure 13a is a perspective view from the rear of part of the main rotor shown in Figure 12;
Figure 13b is a perspective view of an end portion of the main rotor shown in Figures 12 and 13a;

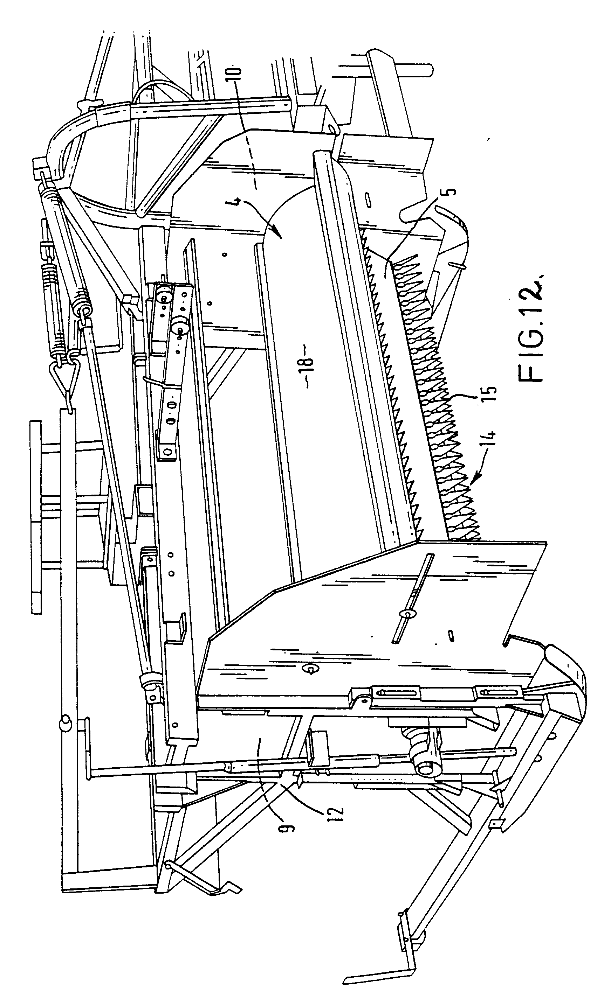

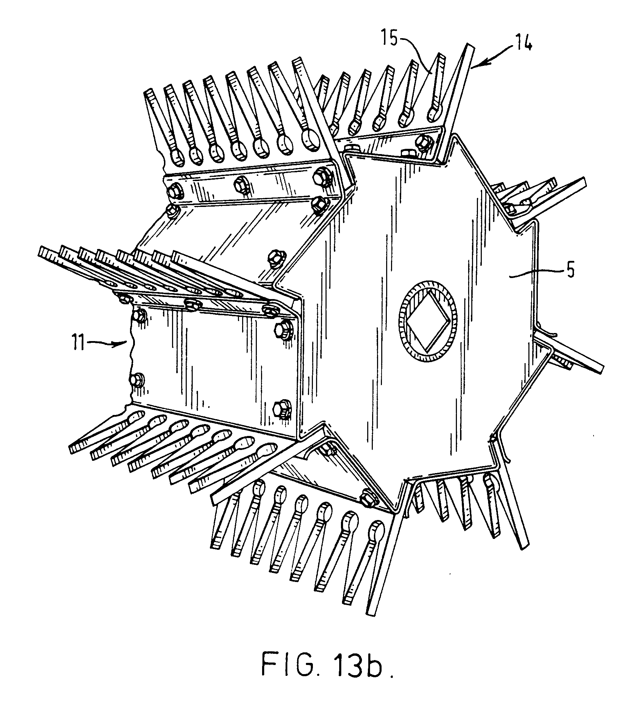

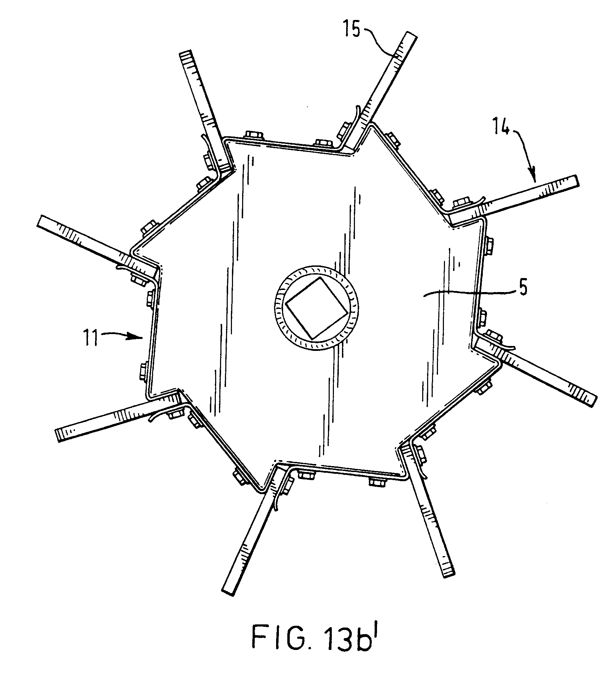

Figure 13b' is an end view of the rotor shown in Figures 12 to 13b;

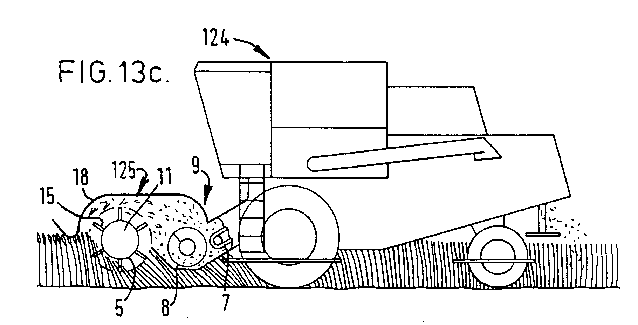

Figure 13c shows in diagrammatic side view, partly in section, a harvesting apparatus which may embody the invention and generally in the form of a conventional combine harvester in which a stripping apparatus embodying the invention replaces the conventional cutting table of the combine harvester;

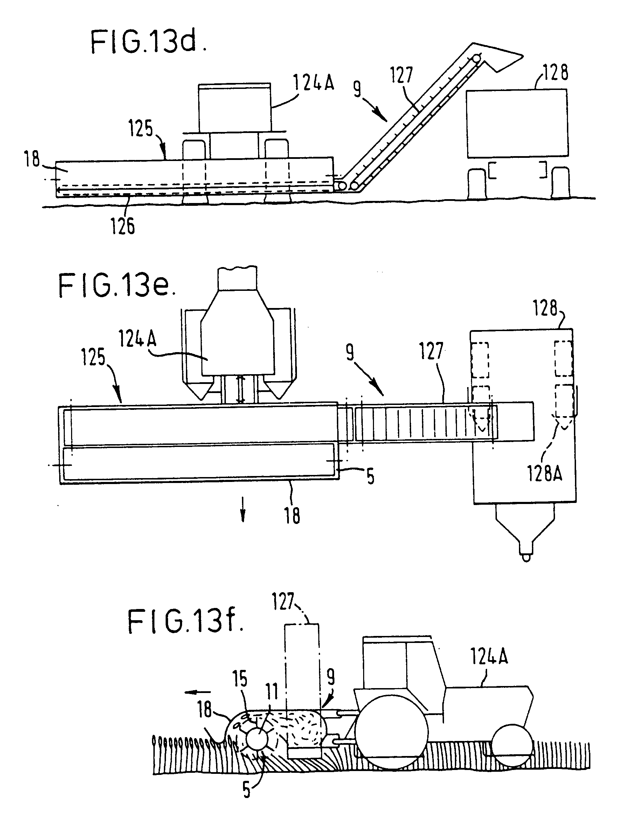

Figure 13d is an outline front view of a stripping apparatus which may embody the invention, delivering detached material onto a transverse belt conveyor and then onto a cleated-belt elevator for delivery into a bulk trailer;
Figure 13e is an outline plan view of the apparatus shown in Figure 13d; and
Figure 13f is an outline side view, partly in section, of the stripper harvester shown in Figure 13d.

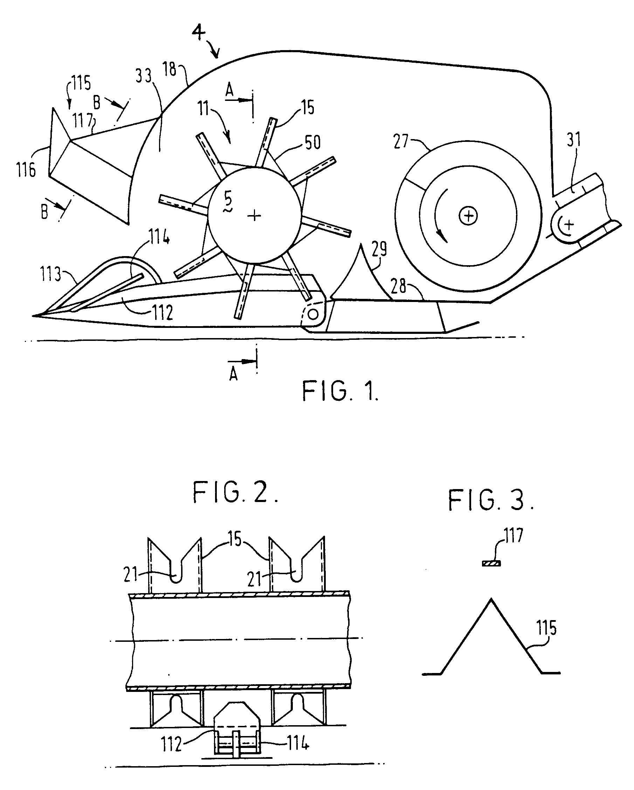

Referring to Figure 1 the apparatus comprises a mobile frame 12 on which is mounted a moveable support means which in the example shown is a rotor 11, carrying outwardly projecting crop engaging elements 15. The rotor 11 is driven in the so-called overshot mode so that the crop engaging elements 15 are moved in an upward direction at the front of the apparatus. Guide means co-operate with the crop engaging elements 15 to form a crop flow passage 33. In the example shown, the guide means are constituted by a hood or cover 18 which extends around at least part of the front half of the rotor and defines with the rotor elements 15 the crop flow passage 33 along which crop is conveyed by the rotor. The hood or cover 18 prevents forward projection of parts of the crop detached by the rotor 11.

In operation, rotation of the rotor 11 moves the crop engaging elements 15 so that the elements gather the crop and then move upwardly through the crop, gathering one or more crop stems. As the elements 15 reach the seed or fruit bearing parts of the crop the required parts to be detached are detached by rubbing and/or breaking and/or tearing the parts from the stems.

After the detachment, the required crop parts are conveyed upwardly and rearwardly over the rotor 11, and pass to crop conveying means positioned within a collecting trough 28 having a front wall 29 in close proximity to the rear of the rotor 11. Usually the crop transfer means will include means for transferring crop laterally, eg an auger 27, and means for conveying the crop rearwardly, eg a slatted chain conveyor 31.

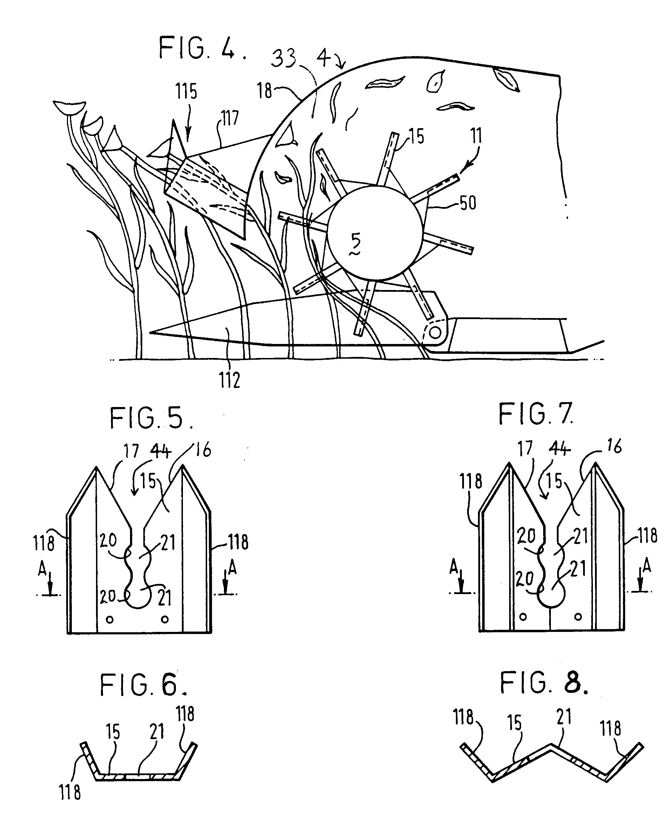

Figure 4 shows the apparatus of Figure 1 in operation, and illustrates the sequence of guiding and stripping a row crop resembling a hybrid between maize and sunflowers. For such crops the stripping rotor diameter may be in excess of 1 m and that the number of transverse rows of stripping elements can be greater than the eight shown. The dimensions of the stripping elements may be adapted to suit specific applications, particularly the element length, the width to length ratio, the angle of the crop engaging edges, and the size and inclination of wings which may be provided along the outer sides of the elements.

With reference to Figure 2, there is provision for the lateral spacing of the stripping elements on the rotor core to be adjustable, to adapt the rotor quickly and easily to different crops. For example, the elements may be located in transverse channels with provision for clamping or locking them in position. Moreover, the circumferential position of elements covering adjacent crop rows may be offset, so that the drive torque characteristic of the stripping rotor is smoothed out. That is to say, that the elements need not be positioned in straight rows parallel to the axis of rotation of the rotor.

Section AA of Figure 1 is shown in Figure 2 and indicates that the elements 15 are laterally spaced apart to coincide with the row spacing of the crop. (Figure 2 shows a construction which does not embody the invention, but is included by way of explanation of the general structure of the apparatus of Figure 1, which itself may embody the invention.) Between sets of circumferentially aligned stripping elements 15 there is provided hingedly attached to the front of the harvester table a divider assembly 112 which protrudes forwardly into the spaces between crop rows. The dividers 112 have the purpose of deflecting upwardly and sideways any crop stems or parts which are misaligned in respect to the stripping elements 15. It is arranged that the stripping rotor 11 and hood 18 can be raised and lowered independently of such dividers 112 above a minimum setting.

As shown in Figure 2, there may optionally be attached to the main body of the crop divider 112 a central, upwardly projecting bow divider 113. At the sides are rearwardly and upwardly extending crop guides 114, which may be provided with angular adjustment. Attached to the front of the lower hood section 18 are optional upper crop guides 115 whose lateral spacing also coincides with the row spacing. At the front of each upper crop guide 115 is a flared intake section 116. The apex of the cross-sectional shape of an upper guide 115 lies on the vertical plane which passes through the centre of the recesses 21 in the stripping elements 15. Figure 3 shows a section through the upper crop guide 115 in the direction of arrows BB in Figure 1. A support strut 117 above the upper crop guide 115 may be designed to adjust the inclination of the guide 115.

It should be noted that the crop dividers can take many forms and may be pivoted or suspended in many different ways. They may be provided themselves with ground-engaging skids.

In Figures 5 and 6 is shown a stripping element 15 (embodying the invention) for row crops which produce large fruiting bodies or seed heads, or a large bulk of foliage needing to be detached. To accommodate the crop bulk and minimise the risk of loss, a large flared wing 118, set at a suitable angle to the horizontal, is provided on each side. The central recess has more than one relief aperture 21, to ensure stripping of wanted crop parts from the "sheltered" stem region and to cause lateral "agitation".

Figures 7 and 8 show further modifications of the element of Figure 5, in which the central transverse surfaces of the element 15 are inclined upwardly at the centre, that is to say forwardly relative to the direction of movement of the element through the crop.

Throughout this specification, corresponding components of the various arrangements shown are indicated by like reference numerals. For simplicity, the functions and inter-relationships between the various components are not described in connection with each figure when these have been described previously. It is particularly to be appreciated that where corresponding components have like reference numerals, the appropriate description applies equally each time those elements are referred to.

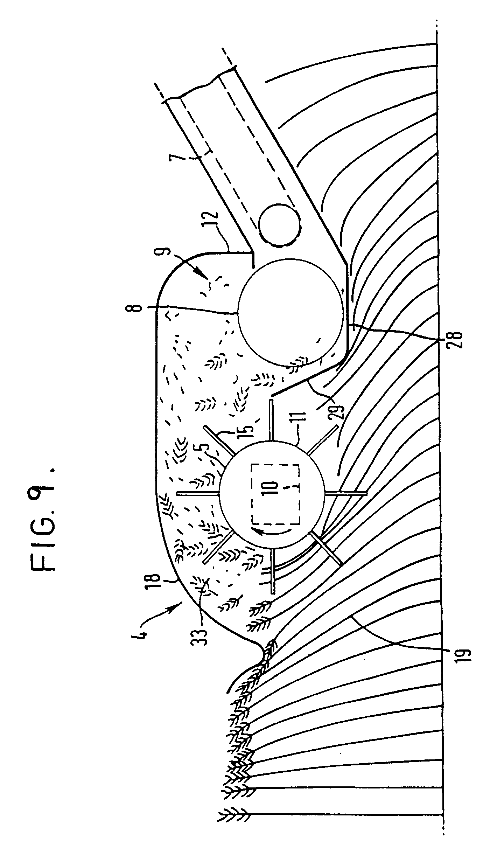

Referring to Figure 9 there is shown in diagrammatic side view the generalised layout of an apparatus which may embody the present invention for harvesting crop. The apparatus comprises a mobile frame for movement over the ground, indicated generally at 12. Mounted on the frame 12 is a moveable support means 5 which in the example shown is a rotor 11, although other support means may be used such as a conveyor belt.

Mounted on the rotor 11 are a plurality of outwardly projecting crop engaging elements 15, which may take a number of forms in accordance with the invention, as has been described hereinbefore or will be described hereinafter.

The rotor 11 is driven by drive means indicated diagrammatically at 10 which may conveniently comprise a gear box and power train driven by a tractor, or other power source such as the engine of a combine harvester. The rotor 11 is driven in the so-called overshot mode so that the crop engaging elements 15 are moved in an upward direction at the front of the apparatus. There are provided guide means 4 co-operating with the crop engaging elements 15 to forma crop flow passage 33. In the example shown, the guide means 4 are constituted by a hood or cover 18 which extends around at least part of the front half of the rotor and defines with the rotor elements 15 the crop flow passage 33 along which crop is conveyed by the rotor. The hood or cover 18 prevents forward projection of parts of the crop detached by the rotor 11.

In operation, rotation of the rotor 11 moves the crop engaging elements 15 so that the distal tips of the elements enter the crop with minimum disturbance of the stems 19 of the crop. The elements 15 then move upwardly through the crop, gathering one or more crop stems. As the elements 15 reach the upper parts of the crop the required parts to be detached are detached by rubbing and/or breaking and/or tearing the parts from the stems.

After the detachment, the required crop parts are conveyed upwardly and rearwardly over the rotor 11, and pass to crop conveying means indicated generally at 9, and positioned within a collecting trough 28 having a front wall 29 in close proximity to the rear of the rotor 11. Usually the crop transfer means 9 will include means for transferring crop laterally, indicated diagrammatically at 8, and means for conveying the crop rearwardly, indicated diagrammatically at 7. Conveniently the transverse crop transfer means 8 may be an auger, but may alternatively be a transverse conveyor belt. Conveniently the rearward crop transfer means 7 may be a conveyor, for example a slatted chain conveyor, although other means may be provided.

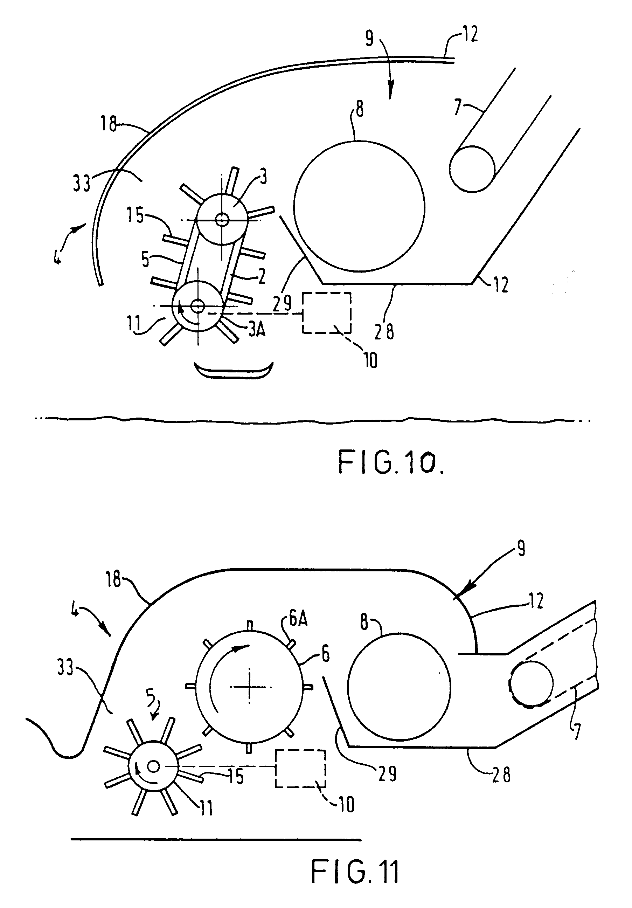

In Figure 10 there is shown in diagrammatic side view the generalised layout of an alternative apparatus which may embody the present invention, also for harvesting crop. The apparatus again comprises a mobile frame 12 for movement over the ground, and mounted on the frame 12 is a moveable support means 5 carrying a plurality of outwardly projecting crop engaging elements 15, which may take a number of forms in accordance with the invention, as has been described hereinbefore or will be described hereinafter. Except for the moveable support means 5, the other components of the apparatus of Figure 10 correspond generally to those shown in Figure 9, and in general the description given with regard to Figure 9 applies also to Figure 10.

The moveable support means 5 in the apparatus of Figure 10 comprises a conveyor 2 mounted for movement around two sets of pulleys or other guides 3 and 3A. The elements 15 are mounted on the conveyor 2, which is driven by drive means indicated generally at 10, in a direction such that the elements 15 move upwardly and rearwardly at the front of the apparatus.

In Figure 11 there is shown in diagrammatic side view the generalised layout of a yet further alternative general form of apparatus which may embody the present invention for harvesting crop. Again, in general the components shown in Figure 11 correspond to those shown in Figures 9 and 10, the only difference being in the form of a moveable support means 5 which is provided. Again, the description which has been provided with regard to Figure 9 is in general applicable also to the apparatus of Figure 11.

In Figure 11 the moveable support means 5 is provided by a rotor 11 of smaller diameter than that shown in Figure 9, and this rotor operates in close co-operation with a second rotor 6 (in the example a conveying drum), which is provided to the rear of and above the stripping rotor 11. The second rotor 6 carries crop conveying elements 6A (in the example relatively shallow ribs extending across the width of the drum, and spaced around its circumference). In the embodiment of Figure 11, the functions of stripping and conveying which in Figure 9 are carried out by the rotor 11, are divided between the rotors 11 and 6, with the rotor 11 being provided chiefly for stripping crop,and the rotor 6 being provided for conveying the crop upwardly and rearwardly over the rotor 6 to the crop transfer means 8 at the rear of the apparatus and to prevent crop wrapping around the rotor 11. As an alternative to shallow ribs, the rotor 6 may be fitted with deeper ribs of serrated profile, to intermesh in an overlapping mode with the combs on the rotor 11. In that form it positively prevents wrapping of crop around the rotor 11, even if the rotor has a smaller diameter than shown. As with the arrangements of Figures 9 and 10, the embodiment of Figure 11 may utilise any of the forms of crop stripping elements described hereinbefore or as will be described hereinafter, and may also utilise any features of the invention described herein.

It is particularly to be appreciated that the arrangements of Figures 9, 10 and 11 indicate general layouts of apparatus which may embody the invention, and that the various components shown may be provided in practice by any of the appropriate components which have been described hereinbefore, or are to be described hereinafter.

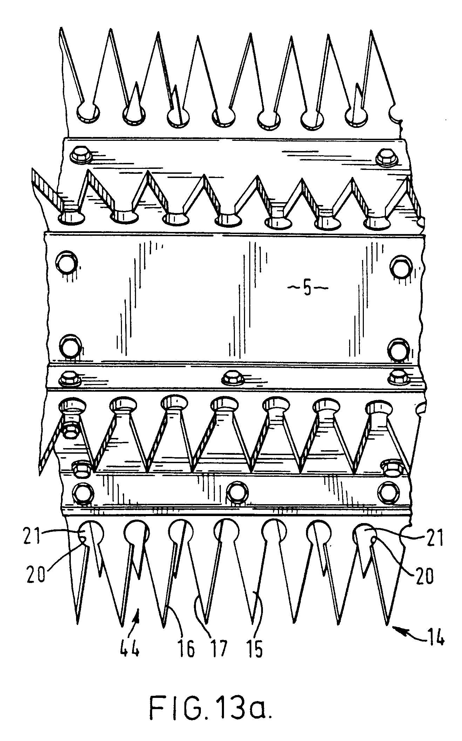

Referring now further to Figure 9, there is shown one form of a crop stripping apparatus which may embody the invention, which conveniently may be used as a header for a combine harvester, or may be used in conjunction with other threshing and grain separating apparatus. Reference is also made to Figures 12, 13a, 13b, and 13b', which do not illustrate the invention, but are included to show the general construction of apparatus which may be modified to embody the present invention.

The rotor 11 comprises an inner core 13 generally in the form of a circular section or, preferably, flat-sided core (to be described further hereinafter), and a succession of transverse combs 14 spaced circumferentially around the rotor 11.

As shown in Figures 12, 13a, 13b, and 13b', each comb 14 maybe formed from a transverse rib of solid material shaped to provide an array of teeth 15 mounted in a row transverse to the direction of movement of the harvesting apparatus through the crop. Each tooth 15 has side edges 16 and 17 which diverge from each other in a direction away from the distal tip of the tooth 15.

There is provided at the junction of each adjacent pair of side edges 16 and 17 of adjacent teeth 15, a relief aperture 21, which in the example shown, is part circular. Each aperture 21 is formed by relieved portions of adjacent teeth at the base regions thereof. Thus each tooth has a portion at or in the region of its base which is narrower than the widest part of the portion which has diverging side edges. In the examples shown, each comb is formed from a flat sheet-like rib of solid material, having cut therein, or otherwise formed, a series of keyhole shaped apertures, forming the said teeth.

The rotor 11 is driven to rotate in the so-called overshot mode, so that the combs 14 are moved in an upward direction at the front of the apparatus. There is provided over the front of the rotor 11 a hood or cover 18 to prevent forward projection of parts of the crop detached by the rotor 11.

In operation, rotation of the rotor 11 moves the combs 14 so that the narrow or pointed distal tips of the teeth 15 enter the crop with minimum disturbance of the stems 19 of the crop. The teeth 15 then move upwardly through the crop, gathering between adjacent side edges of adjacent teeth one or more crop stems. As the teeth 15 reach the seed-bearing heads of the crop, the seeds, or seed heads, are detached by rubbing the seeds free, or snapping off the seed heads. The seeds and seed heads are removed by engagement of the crop with the side edges 16 and 17 of the teeth, and by engagement with the edges 20 of the apertures 21 at the base of the junctions of adjacent side edges 16 and 17.

An upturned leading portion 32 of the cover usually engages crop first during forward movement of the apparatus. The upturned leading portion 32 of the rotor cover 18 engages the crop and preferably seals off the crop passage 33 immediately in front of the overshot rotor 11.

Material including grain and grain heads is dislodged and then impelled upwardly and rearwardly along the passage 33, by the effect of the combs 14. The overhead hood 18 is important in avoiding forward projection of grain and grain heads. The hood produces a funnel effect so that grain is guided into the machine rather than being ricochetted back onto the ground.

The stripped crop stems 19 pass under the machine and remain standing in the field. To avoid straw being pressed into the ground by tractor or machine wheels, dividers may be fitted in front of the wheels to force the crop residue apart temporarily.

It will normally be necessary to provide means for adjusting the height above ground of the stripping rotor 11 so as to be at the correct height in relationship to the height of the seed-bearing heads or other required parts of the crop. The height above the ground of the stripping rotor unit alone may be varied,or the height of the whole header arrangement may be varied according to conditions. For example, the rotor will need to be lowered in order to gather the desired material efficiently where crops are exceptionally short or laid. Proximity sensors may be attached at the front of the stripping rotor cover 18, and the output signal may be used to keep the rotor height adjusted automatically in relation to the crop horizon and/or to adjust the height of the rotor cover.

It should be noted that by adjustment of the speed of the combing ribs 14, together with appropriate arrangements of the geometry of the components, selective harvesting of only the ripest seed, particularly of herbage seed, may be effected during successive passes of the crop.

The present invention provides a number of advantages, in particular where the invention is applied to stripping grain from standing crop such as wheat, barley and oats. Grain stripping of standing crop leaves the straw standing rather than leaving cut straw from a combine harvester. The standing straw is easier to chop for subsequent disposal, than is the randomly orientated cut straw which is left spread or in spaced windrows by a combine harvester. Grain crop harvested in accordance with the present invention can,at least in preferred embodiments, have a higher proportion of grain to material other than grain, compared with the material collected by a combine harvester. In consequence higher work rates become possible, because in a combine harvester these are related principally to the throughput of straw. Finally, at least in preferred embodiments, the apparatus often leaves less wasted grain and grain heads in the field than does a conventional combine harvester.

Typical applications of the invention are shown in Figures 13c to 13f. In Figure 13c, a conventional combine harvester 124 is shown to have a crop stripping header 125 which may embody the invention, in place of the conventional cutting table. The grain and other material detached from the crop is delivered into lateral crop transfer means 8, in this case a transverse crop auger 27 from which it passes to a crop elevating means 7, in this case a central feed conveyor 31, and thence to the threshing drum and separating and cleaning mechanisms of the combine harvester. The small amount of efflux at the rear is spread evenly by a rotary spreading mechanism.

Figure 13d is an outline front view of a tractor-mounted stripping header 125 delivering the detached material onto a lateral crop transfer means, in this case a transverse belt conveyor 126, and then onto a crop elevating means in this case a cleated-belt elevator 127 for delivery into a bulk trailer 128 drawn by a second tractor. The tractor 124A operating the stripper header 125 has reverse-drive facility so that the operator can effectively supervise the harvesting operation. Figure 13c, shows an outline plan view where the tractor and trailer wheels are seen to be fitted with crop dividers 128A for parting the straw or other stripped crop so that the wheels can pass without pressing down significant amounts of it. An outline side view of the stripper harvester of Figures 13d and 13e is shown in Figure 13f.

There will now be discussed a number of general features which may be applicable to various embodiments set out above.

In addition to means for adjusting the height of the stripper mechanism and/or the hood or other guide means, by judgement of the operator, there may be provided sensors on or in front of the stripping header, or each section of such a header, to identify the crop horizon, the signals derived from the sensors being used to control the height of the stripping header or a section thereof, automatically. Normally the lower extent of stripper height setting will be provided by skids under or to the rear of bottom-dead-centre.

A further additional feature which may be provided in any of the embodiments described, comprises a reciprocating cutter bar or rotary cutter which may be fitted for severing the stripped material at a preselected height above ground, after stripping.

Considering now generally the dimensions which maybe used in embodiments of the invention, preferably the stripping rotor 11 for cereal and most forage crop has an overall diameter of 500-600 mm. However, smaller diameters are suitable for short or low crops (as in Figure 11), and larger diameters for particularly tall crops. By way of example, appropriate tip speeds of stripping rotors embodying the invention for the harvesting of cereals range from less than 10 m/s to approximately 25 m/s, and for harvesting lucerne (alfalfa) leaf, speeds should be in the range of 15 to 30 m/s. Although the stripping rotor 11 in Figure 1a is shown as having eight rows of elements fewer or more may be used. The combs or ribs, or other forms of rows of elements, need not be arranged in straight rows perpendicular to the direction of travel but they may be curved or helically mounted, to even out the drive torque and achieve delivery of the stripped material to one side or into the centre of any collecting device. By way of example of particular dimensions which may be used, the rotor shown in Figure 11a may have a diameter of 550 mm overall; the diameter of an inner core may be 300 mm, and the depth of each element from the tip to the base of a recess between adjacent elements may be 80 mm. In typical use in standing cereal crops, the bottom of the rotor may be set to 250 to 300 mm above the ground. Conveniently the bottom of the rotor may be set to a height equivalent to about one quarter of the height of the crop.

Where the overall diameter of the rotor is in the range 400 mm to 700 mm, the rate of rotation of the rotor may be preferably in the range 250 to 950 rev/min.

Rotor outer diameters may vary from approximately 200 mm to 1000 mm diameter, a preferred range being 400mm to 600 mm diameter. Tip speeds of the crop engaging elements may vary within the approximate range 5 to 40 m/s.

Considering further the general arrangement of the apparatus, and dimensions which can be used, it has been found that there is an important relationship between so called header losses (that is to say losses of free grains and heads or part heads) and the vertical front clearance of the rotor hood relative to a datum level of the bottom-dead-centre of the stripping rotor. Adjustment of the vertical clearance at the front of the hood was found to be particularly effective in reducing header losses. Losses decreased steeply with increasing clearance up to around 250 mm and reached a minimum at around 350 mm.

Thus in many preferred forms of the invention, the vertical front clearance of the rotor hood relative to the bottom-dead-centre level of the rotor, lies in the range 300 to 370 mm, preferably in the range 330 to 350mm. In most normal conditions horizontal hood-to-rotor clearance is of secondary importance, but preferably should be at least 90 mm in most crop conditions.

By the vertical front clearance of the rotor hood relative to the bottom-dead-centre level of the rotor is meant the height of the lowest portion of the hood projecting in front of the stripping rotor, above a horizontal plane passing through the bottom-dead-centre of the stripping rotor. By the horizontal hood-to-rotor clearance is meant the distance between the lowest point of the hood projecting towards the rotor, and a vertical plane, passing through the front-dead-centre of the periphery of the stripping rotor.

## Claims

1. Apparatus for harvesting required crop parts from standing crop comprising
a mobile frame (12) for movement over the ground,
moveable support means (5) mounted for driven movement relative to the frame,
a plurality of outwardly projecting crop engaging elements (15) mounted on the moveable support means (5),
guide means (4) cooperating with the crop engaging elements to form a crop flow passage (33), and
drive means (10) for driving the moveable support means (5) to carry the elements (15) upwardly at a front region of the apparatus so as to detach from standing crop predetermined required parts of the crop and to move the detached crop parts along the crop flow passage (33), the crop engaging elements (15) being arranged to engage standing crop while projecting forwardly relative to the direction of forward travel of the apparatus, the forwardly projecting crop engaging elements (15) forming in operation a plurality of crop gathering regions (44) each having converging boundaries (16,17),
characterised in that each crop gathering region (44) has an intake region formed by said converging boundaries (16,17) and at least two succeeding relief regions (21) which lead inwardly away from the distal ends of the elements (15), each relief region (21) having boundaries (20) which, at the entrance to the relief region, diverge from each other and face away from the distal ends of the crop engaging elements (15).

2. Apparatus according to claim 1 in which the said relief regions (21) are provided for allowing stripped remaining crop parts to be released from the elements (15) and for providing edges of the elements (15) adapted to strip required parts from the crop.

3. Apparatus according to any preceding claim in which the boundary of each relief region (21) lies substantially on a circle.

4. Apparatus according to any preceding claim in which the crop engaging elements (15) have distal tips for entering into and dividing crop, and have side edges (16,17) diverging from each other in a direction away from the distal tips of the elements (15).

5. Apparatus according to any preceding claim in which each crop engaging element (15) has a transverse surface for impelling detached crop parts along the crop flow passage (33).

6. Apparatus according to claim 5 in which the drive means (10) is arranged to drive the crop engaging elements (15) at a speed such as to propel the detached crop parts in a fast moving stream along the crop flow passage (33).

7. Apparatus according to any preceding claim in which the crop stripping elements (15) are resiliently mounted, and/or made of flexible resilient material.

8. Apparatus according to any preceding claim in which the said crop stripping elements (15) are arranged with elements (15) which follow each other along the support means (5) being in register with one another.

9. Apparatus according to any preceding claim in which the moveable support means (5) comprises a rotor (11).

10. Apparatus according to any preceding claim in which the said moveable support means (5) comprises an endless conveyor (2).

11. Apparatus according to any preceding claim in which the guide means (4) comprises a cover (18) extending around part of the region at which the crop engaging elements (15) move at the front region of the apparatus.

12. A method of harvesting crop comprising moving through a standing crop a harvesting apparatus, moving upwardly at a front region of the apparatus a plurality of crop engaging elements (15) which project outwardly from the moveable support means (5) on which they are mounted, engaging the standing crop by the moving elements (15) when projecting forwardly relative to the direction of movement of the apparatus, the forwardly projecting crop engaging elements (15) forming a plurality of crop gathering regions (44) each having converging boundaries (16,17), detaching from standing crop predetermined required parts of the crop, conveying the detached crop parts along a crop flow passage (33), and collecting the detached crop parts,
characterised in that the step of engaging the standing crop includes gathering crop in the said crop gathering regions (44) by means of an intake region formed by the said converging boundaries (16,17), guiding the crop to at least two succeeding relief regions (21) which lead inwardly away from the distal ends of the elements (15) and which have boundaries (20) which, at the entrance to the relief region (21), diverge from each other and face away from the distal ends of the crop engaging elements (15), detaching crop parts by the effect of edges of elements (15) defining relief regions (21), and releasing stripped remaining standing crop parts from the elements (15) through relief regions (21) of the elements (15).

13. A method according to claim 12, in which the step of detaching crop parts includes detaching crop parts from regions of the standing crop which face forwardly relative to the direction of movement of the apparatus, by means of edges (20) of the crop engaging elements (15) which face away from the distal ends of the elements.

14. A method according to claim 12 or 13 including the step of impelling the detached crop parts along the crop flow passage (33) by means of transverse surfaces which are provided on the elements (15).

15. A method according to any of claims 12 to 14 including the step of entering into and dividing crop by distal tips of crop engaging elements (15) having side edges (16,17) which diverge from each other in a direction away from the distal tip of the element (15).

16. A method according to any of claims 12 to 15 including the step of propelling the detached crop parts along the crop flow passage (33) by the crop engaging elements (15) in a fast moving stream.

## Patentansprüche

1. Vorrichtung zum Ernten benötigter Feldfruchtteile einer stehenden Feldfrucht, mit:
einem beweglichen Rahmen (12) zur Bewegung über dem Boden, beweglichen Trägermitteln (5), die für eine angetriebene Bewegung relativ zum Rahmen befestigt sind,
einer Mehrzahl von nach außen vorstehenden Feldfruchtgreifelementen (15), die an den beweglichen Trägermitteln (5) befestigt sind, Führungsmitteln (4), die mit den Feldfruchtgreifelementen zusammenwirken, um eine Feldfruchtdurchlaufpassage (33) zu bilden, und Antriebsmitteln (10) zum Antrieb der beweglichen Trägermittel (5), um die Elemente (15) im Vorderbereich der Vorrichtung aufwärts zu tragen, um von der stehenden Feldfrucht ausgewählte benötigte Teile der Feldfrucht abzulösen und die abgelösten Feldfruchtteile entlang der Feldfruchtdurchlaufpassage (33) zu bewegen,
wobei die Feldfruchtgreifelemente (15) so angeordnet sind, daß sie die stehende Feldfrucht greifen, während sie relativ zu der Vorwärtsbewegungsrichtung der Vorrichtung nach vorn vorstehen, wobei die nach vorn vorstehenden Feldfruchtgreifelemente (15) im Betrieb eine Mehrzahl von Feldfruchtsammelbereichen (44) bilden, von denen jeder zusammenlaufenden Randbereiche (16, 17) aufweist,
dadurch gekennzeichnet, daß
jeder Feldfruchtsammelbereich (44) einen Einlaufbereich aufweist, der durch die zusammenlaufenden Randbereiche (16, 17) und mindestens zwei aufeinanderfolgende Entlastungsbereiche (21), welche von den körperfernen Enden der Elemente (15) weg nach innen führen, gebildet ist, wobei jeder Entlastungsbereich (21) Randbereiche (20) hat, die am Eingang zum Entlastungsbereich auseinanderlaufen und von den körperfernen Enden der Feldfruchtgreifelemente (15) weggerichtet sind.

2. Vorrichtung gemäß Anspruch 1, bei der die Entlastungsbereiche (21) vorgesehen sind, um zu ermöglichen, daß abgestreifte übrigbleibende Feldfruchtteile von den Elementen (15) freigegeben werden, und um Kanten der Elemente (15) zu schaffen, die zum Abstreifen der benötigten Teile der Feldfrucht eingerichtet sind.

3. Vorrichtung nach einem der vorhergehenden Ansprüche, bei der der Randbereich eines jeden Entlastungsbereichs (21) im wesentlichen auf einem Kreis verläuft.

4. Vorrichtung nach einem der vorhergehenden Ansprüche, bei der die Feldfruchtgreifelemente (15) körperferne Spitzen zum Einfahren in die Feldfrucht und Aufteilen derselben aufweisen und Seitenkanten (16,17) aufweisen, die in eine Richtung weg von den körperfernen Enden der Elemente (15) auseinanderlaufen.

5. Vorrichtung nach einem der vorhergehenden Ansprüche, bei der jedes Feldfruchtgreifelement (15) eine querverlaufende Oberfläche zum Treiben abgelöster Feldfruchtteile entlang der Feldfruchtdurchlaufpassage (33) hat.

6. Vorrichtung nach Anspruch 5, bei der das Antriebsmittel (10) angeordnet ist, um die Feldfruchtgreifelemente (15) mit einer solchen Geschwindigkeit anzutreiben, daß die abgelösten Feldfruchtteile in einem schnell bewegten Strom entlang der Feldfruchtdurchlaufpassage (33) vorwärts getrieben werden.

7. Vorrichtung nach einem der vorhergehenden Ansprüche, bei der die Feldfruchtabstreifelemente (15) elastisch befestigt sind, und/oder aus einem flexiblen, elastischen Material hergestellt sind.

8. Vorrichtung nach einem der vorhergehenden Ansprüche, bei der die Feldfruchtabstreifelemente (15) mit Elementen (15) angeordnet sind, die entlang des Trägermittels (5) aufeinander folgen und registerhaltig zueinander angeordnet sind.

9. Vorrichtung nach einem der vorhergehenden Ansprüche, bei der das bewegliche Trägermittel (5) einen Rotor (11) umfaßt.

10. Vorrichtung nach einem der vorhergehenden Ansprüche, bei der das bewegliche Trägermittel (5) einen Endlosförderer (2) umfaßt.

11. Vorrichtung nach einem der vohergehenden Ansprüche, bei der das Führungsmittel (4) einen Deckel (18) umfaßt, der sich um einen Teil des Bereiches erstreckt, an dem die Feldfruchtgreifelemente (15) sich im Vorderbereich der Vorrichtung bewegen.

12. Verfahren zum Ernten von Feldfrüchten mit: Bewegen einer Erntevorrichtung durch eine stehende Feldfrucht, Aufwärtsbewegen einer Mehrzahl von Feldfruchtgreifelementen (15), die von beweglichen Trägermitteln (5), an denen sie befestigt sind, nach außen vorstehen, in einem Vorderbereich der Vorrichtung, Greifen der stehenden Feldfrucht durch die beweglichen Elemente (15), während sie relativ zur Bewegungsrichtung der Vorrichtung nach vorn vorstehen, wobei die nach vorn vorstehenden Feldfruchtgreifelemente (15) eine Vielzähl von Feldfruchtsammelbereichen (44) bilden, deren jeder zusammenlaufende Randbereiche (16, 17) aufweist, Ablösen ausgewählter, benötigter Teile der Feldfrucht von der stehenden Feldfrucht, Fördern der abgelösten Feldfruchtteile entlang einer Feldfrüchtdurchlaufpassage (33) und Sammeln der abgelösten Feldfruchtteile,
dadurch gekennzeichnet, daß
der Schritt des Greifens der stehenden Feldfrucht das Sammeln der Feldfrucht in den Feldfruchtsammelbereichen (44) mittels eines Einlaufbereiches, der durch die zusammenlaufenden Randbereiche (16,17) gebildet wird, das Führen der Feldfrucht zu mindestens zwei aufeinanderfolgenden Entlastungsbereichen (21), welche von den körperfernen Enden der Elemente (15) nach innen führen und die Randbereiche (20) haben, die am Eingang zu dem Entlastungsbereich (21) auseinanderlaufen und von den körperfernen Enden der Feldfruchtgreifelemente (15) fort weisen, das Ablösen der Feldfruchtteile mittels der Kanten der Elemente (15), die die Entlastungsregion (21) definieren und das Freigeben der abgestreiften, zurückgebliebenen stehenden Feldfruchtteile von den Elementen (15) durch die Entlastungsbereiche (21) der Elemente (15) umfaßt.

13. Verfahren nach Anspruch 12, bei dem der Schritt des Lösens von Feldfruchtteilen das Lösen von Feldfruchtteilen von den Bereichen der stehenden Feldfrucht, welche nach vorne relativ zur Bewegungsrichtung der Vorrichtung ausgerichtet sind, mittels Seitenkanten (20) der Feldfruchtgreifelemente (15), welche von den körperfernen Enden der Elemente fort weisen, umfaßt.

14. Verfahren nach Anspruch 12 oder 13, das den Schritt des Treibens der abgelösten Feldfrüchtteile entlang der Feldfrüchtdurchlaufpassage (33) mittels querverlaufender Oberflächen, die an den Elementen (15) vorgesehen sind, umfaßt.

15. Verfahren nach einem der Ansprüche 12 bis 14, das den Schritt des Einfahrens in die Feldfrucht und des Aufteilens derselben mittels der körperfernen Spitzen der Feldfruchtgreifelemente (15), die Seitenkanten (16, 17) aufweisen, welche von den körperfernen Spitzen der Elemente (15) weg auseinanderlaufen, umfaßt.

16. Verfahren nach einem der Ansprüche 12 bis 15, das den Schritt des Vorwärtstreibens der abgelösten Feldfruchtteile entlang der Feldfruchtdurchlaufpassage (33) mittels der Feldfruchtgreifelemente (15) in einem schnell bewegten Strom umfaßt.

## Revendications

1. Machine pour la récolte de parties voulues de cultures sur pied, comprenant
un châssis mobile 12, déplaçable sur le sol,
des moyens de support mobiles (5), montés de façon à être entraînés en mouvement par rapport au châssis,
une multiplicité d'éléments saisisseurs de cultures (15) en saillie vers l'extérieur, montés sur les moyens de support mobiles (5),
des moyens de guidage (4) qui forment, en coopération avec les éléments saisisseurs de cultures, un couloir (33) de passage des cultures, et
des moyens d'entraînement (10) pour entraîner les moyens de support mobiles (5) de façon à faire remonter les éléments (15) dans une région antérieure de la machine, pour détacher des cultures sur pied des parties voulues et prédéterminées de celles-ci et pour entraîner ces parties détachées des cultures le long du couloir (33) de passage des cultures, les éléments (15) saisisseurs de cultures étant agencés de manière à saisir les cultures sur pied au moment où ils font saillie vers l'avant par rapport à la direction d'avance de la machine, les éléments (15) saisisseurs de cultures formant en service, lorsqu'ils font saillie vers l'avant, une multiplicité de régions (44) de rassemblement des cultures qui présentent chacune des limites convergentes (16, 17),
caractérisée en ce que chaque région (44) de rassemblement des cultures comprend une région d'entrée formée par lesdites limites convergentes (16, 17), et au moins deux régions de dégagement successives (21) qui s'étendent vers l'intérieur en s'éloignant des extrémités distales des éléments (15), chaque région de dégagement (21) présentant des limites (20) qui, à l'entrée de la région de dégagement, divergent l'une par rapport à l'autre et font face à l'opposé des extrémités distales des éléments (15) saisisseurs de cultures.

2. Machine selon la revendication 1, dans laquelle lesdites régions de dégagement (21) sont prévues pour permettre que les parties restantes dépouillées des cultures soient dégagées des éléments (15) et pour fournir des arêtes des éléments (15), propres à dépouiller les cultures desdites parties voulues.

3. Machine selon la revendication 1 ou 2, dans laquelle la limite de chaque région de dégagement (21) a un tracé pratiquement circulaire.

4. Machine selon l'une quelconque des revendications 1 à 3, dans laquelle les éléments (15) saisisseurs de cultures présentent des pointes distales pour pénétrer dans les cultures et les diviser, ainsi que des arêtes latérales (16, 17) qui divergent l'une par rapport à l'autre dans la direction de l'eloignement à partir des pointes distales des éléments (15).

5. Machine selon l'une quelconque des revendications 1 à 4, dans laquelle chaque élément (15) saisisseur de cultures présente une surface transversale pour chasser les parties détachées des cultures le long du couloir (33) de passage des cultures.

6. Machine selon la revendication 5, dans laquelle les moyens d'entraînement (10) sont agencés de façon à entraîner les éléments (15) saisisseurs de cultures à une vitesse telle que les parties détachées des cultures soient propulsées en un courant rapide le long du couloir (33) de passage des cultures.

7. Machine selon l'une quelconque des revendications 1 à 6, dans laquelle les éléments (15) de dépouille des cultures sont montés élastiquement et/ou sont faits d'une matière souple et élastique.

8. Machine selon l'une quelconque des revendications 1 à 7, dans laquelle lesdits éléments (15) de dépouille des cultures sont disposés de sorte que des éléments (15) qui se suivent le long des moyens de support (5) soient en correspondance mutuelle exacte.

9. Machine selon l'une quelconque des revendications 1 à 8, dans laquelle les moyens de support mobiles (5) comprennent un rotor (11).

10. Machine selon l'une quelconque des revendications 1 à 9, dans laquelle lesdits moyens de support mobiles (5) comprennent un transporteur sans fin (2).

11. Machine selon l'une quelconque des revendications 1 à 10, dans laquelle les moyens de guidage (4) comprennent un couvercle (18) qui s'étend autour d'une partie de la région dans laquelle les éléments (15) saisisseurs de cultures se déplacent dans la région antérieure de la machine.

12. Procédé de recolte de cultures, comprenant les opérations consistant à déplacer à travers des cultures sur pied une machine recolteuse, à entraîner de bas en haut, dans une région antérieure de la machine, une multiplicité d'éléments (15) saisisseurs de cultures qui font saillie vers l'extérieur sur les moyens de support mobiles (5) sur lesquels ils sont montés, à saisir les cultures sur pied par les éléments (15) en mouvement, au moment où ceux-ci font saillie vers l'avant par rapport à la direction d'avance de la machine, les éléments (15) saisisseurs de cultures, en saillie vers l'avant, formant une multiplicité de régions (44) de rassemblement des cultures présentant chacune des limites convergentes (16, 17), à détacher des cultures sur pied des parties voulues prédéterminées de celles-ci, à transporter les parties détachées des cultures le long d'un couloir (33) de passage des cultures, et à recueillir les parties détachées des cultures,
caractérisé en ce que l'étape consistant à saisir les cultures sur pied comprend les opérations consistant à rassembler les cultures dans lesdites régions (44) de rassemblement des cultures au moyen d'une région d'entrée formée par lesdites limites convergentes (16, 17), à guider les cultures vers au moins deux régions de dégagement successives (21) qui s'étendent vers l'intérieur en s'éloignant des extrémités distales des éléments (15) et qui présentent chacune des limites (20) qui, à l'entrée de la région de dégagement (21), divergent l'une par rapport à l'autre et font face à l'opposé des extrémités distales des éléments (15) saisisseurs de cultures, à détacher des parties des cultures sous l'action d'arêtes d'éléments (15) définissant les regions de dégagement (21), et à dégager des éléments (15) les parties restantes dépouillées des cultures sur pied par passage à travers les régions de dégagement (21) des éléments (15).

13. Procédé selon la revendication 12, dans lequel l'étape consistant à détacher des parties des cultures comprend l'opération consistant à détacher des parties de cultures à partir de regions des cultures sur pied qui sont en face vers l'avant par rapport à la direction de déplacement de la machine, au moyen d'arêtes (20) des éléments (15) saisisseurs de cultures qui font face à l'opposé des extrémités distales de ces éléments.

14. Procédé selon la revendication 12 ou 13, comprenant l'étape consistant à chasser les parties détachées des cultures le long du couloir (33) de passage des cultures, au moyen de surfaces transversales qui sont prévues sur les éléments (15).

15. Procédé selon l'une quelconque des revendications 12 à 14, comprenant l'opération consistant à diviser les cultures par pénétration, dans celles-ci, des pointes distales d'éléments (15) saisisseurs de cultures comportant des arêtes latérales (16, 17) qui divergent l'une par rapport à l'autre dans la direction de l'éloignement à partir de la pointe distale de cet élément (15).

16. Procédé selon l'une quelconque des revendications 12 à 15, comprenant l'opération consistant à propulser les parties détachées des cultures en un courant rapide le long du couloir (33) de passage des récoltes, sous l'action des éléments (15) saisisseurs des cultures.
